# FASCICULE DE BREVET EUROPEEN

(11) **EP 3 774 948 B1**
(45) Date de publication et mention de la délivrance du brevet: **11.02.2026**
(21) Numéro de dépôt: 19712798.8
(22) Date de dépôt: 29.03.2019
(51) Int. Cl.: C08F 220/56

(54) **PROCEDE DE FABRICATION DE POLYMERES ANIONIQUES ET UTILISATION COMME AGENTS DE RESISTANCE DANS UN PROCEDE PAPETIER**
VERFAHREN ZUR HERSTELLUNG VON ANIONISCHEN POLYMEREN UND VERWENDUNG ALS WIDERSTANDMITTEL IN EINEM PAPIERHERSTELLUNGSVERFAHREN
METHOD FOR PRODUCING ANIONIC POLYMERS AND USE AS RESISTANCE AGENTS IN A PAPER-MAKING METHOD

(30) Priorité: 30.03.2018 FR 1852813
(43) Date de publication de la demande: 17.02.2021
(73) Titulaire: SNF Group, 42160 Andrézieux-Bouthéon (FR)
(72) Inventeur: HUND, René, 42163 ANDREZIEUX CEDEX (FR); BARRIERE, Cyril, 42163 ANDREZIEUX CEDEX (FR); OLIVIER, Rémi, 42163 ANDREZIEUX CEDEX (FR)
(74) Mandataire: Lavoix
(86) Numéro de dépôt international: PCT/EP2019/057978
(87) Numéro de publication internationale: WO 2019/185858

(56) Documents cités:
- WO-A1-2017/005562
- CN-A- 107 353 760
- JP-A- 2017 210 701

## Description

L'invention concerne un nouveau procédé de fabrication de polymères anioniques hydrosolubles, produits de la réaction entre un aldéhyde et un polymère anionique base comprenant au moins 5 mol% d'acide 2-acrylamido-2-méthylpropane sulfonique et/ou ses sels. Un autre aspect de l'invention concerne un procédé papetier mettant en œuvre ces polymères.

Les polyacrylamides hydrosolubles fonctionnalisés par un aldéhyde sont largement utilisés dans les procédés de fabrication du papier afin d'augmenter notamment la résistance à sec de ces papiers. Ces polyacrylamides hydrosolubles sont principalement fabriqués à partir de polymères bases cationiques ou amphotériques. L'utilisation de polymère anionique hydrosoluble permettrait avantageusement d'améliorer les résistances humides du papier. Néanmoins, l'obtention de polymères anioniques hydrosolubles fonctionnalisés par un aldéhyde présentent l'inconvénient que le traitement acide utilisé pour stopper la réaction entre l'aldéhyde et le polymère base est accompagné d'une importante chute de viscosité de la solution aqueuse de polymère. Les polymères ainsi obtenus présentent des performances applicatives faibles. WO2017/005562 décrit un procédé de production d'une composition de polyacrylamide réticulé aldéhyde utile pour le renforcement du papier. Le procédé comprend les étapes suivantes: a) un agent de réticulation aldéhyde et un polyacrylamide sont mélangés dans de l'eau pour former une solution aqueuse de prépolymère de polyacrylamide réticulé aldéhyde; b) de l'acide est ajouté à ladite solution de prépolymère aqueuse pour ajuster le pH de la solution à une valeur de 1 à 5.

De façon inattendue, la Demanderesse a mis au point un procédé d'obtention de polymères anioniques hydrosolubles fonctionnalisés par un aldéhyde permettant d'obtenir des solutions polymériques sans perte de viscosité lors de l'arrêt de la réaction et un procédé papetier utilisant ces polymères anioniques hydrosolubles permettant d'avoir des performances de résistance à sec et humide améliorées.

Le premier aspect de l'invention concerne un procédé de préparation de polymères anioniques hydrosolubles en solution aqueuse comprenant au moins les étapes successives suivantes
a) polymérisation en solution aqueuse de monomères anioniques dont au moins 5 mol% d'acide 2-acrylamido-2-méthylpropane sulfonique et/ou un de ses sels et d'au moins un monomère non ionique jusqu'à une concentration massique en polymère **A** comprise entre 5 et 40%, le polymère A obtenu contenant entre 5 et 30 mol% de monomères anioniques et entre 70 et 95 mol% d'au moins un monomère non ionique,
b) ajout d'au moins un aldéhyde dans la solution obtenue à l'étape a),
c) acidification à un pH compris entre 3 et 4 de la solution obtenue à l'étape b).

La copolymérisation de l'étape a) se fait de toute manière connue de l'homme du métier.

Sans vouloir être lié par une quelconque théorie, les inventeurs ont montré que de manière avantageuse, la présence, lors de l'étape a) d'au moins 5 mol% d'acide 2-acrylamido-2-méthylpropane sulfonique et/ou un de ses sels permet de maintenir une viscosité constante de la solution lors de l'étape c). De plus de manière particulièrement avantageuse, la composition obtenue à la fin de l'étape c) présente une stabilité accrue dans le temps.

Le polymère **A** obtenu à l'étape a) comprend entre 5 et 30 mol% de monomères anioniques, dont au moins 5 mol% d'acide 2-acrylamido-2-méthylpropane sulfonique et/ou un de ses sels, et entre 70 et 95 mol% d'au moins un monomère non ionique.

Les monomères anioniques mis en œuvre lors de l'étape a), en plus de l'acide 2-acrylamido-2-méthylpropane sulfonique et/ou un de ses sels, sont de préférence choisis parmi l'acide acrylique ou méthacrylique, l'acide itaconique et/ou leurs sels. De préférence, les sels des monomères anioniques sont les sels de sodium et le sel de l'acide 2-acrylamido-2-méthylpropane sulfonique est le sel de sodium.

Dans un mode de réalisation préféré les monomères non ioniques de l'étape a) sont choisis parmi l'acrylamide, le méthacrylamide, le N,N diméthylacrylamide et l'acrylonitrile.

Préférentiellement, le polymère **A** obtenu à l'étape a) est un copolymère d'acrylamide et d'acide 2-acrylamido-2-méthylpropane sulfonique et/ou ses sels. Avantageusement, c'est un copolymère de 2-acrylamido-2-méthylpropane sulfonate de sodium et d'acrylamide. De préférence, ce polymère **A** comprend entre 5 et 30 mol% d'acide 2-acrylamido-2-méthylpropane sulfonique et/ou ses sels et entre 70 et 95 mol% d'acrylamide, de préférence entre 5 et 30 mol% de 2-acrylamido-2-méthylpropane sulfonate de sodium et entre 70 et 95 mol% d'acrylamide.

De préférence, l'étape b) est mise en œuvre à une température comprise entre 19 et 26°C dans un réacteur sous agitation. De préférence, le pH au début de l'addition est ajusté entre 10 et 11 par exemple avec une solution de soude à 10%. La réaction entre l'aldéhyde et le polymère **A** de l'étape a) est accompagnée d'une augmentation de la viscosité de la solution aqueuse.

L'aldéhyde ajouté à l'étape b) est ajouté à une concentration massique de 1 à 30% par rapport au polymère **A** obtenu à l'étape a). De préférence, l'aldéhyde est choisi dans le groupe comprenant le glyoxal, le glutaraldéhyde, le furane-dialdéhyde, le 2-hydroxyadipaldéhyde, le succinaldéhyde, le dialdéhyde amidon, le 2,2 diméthoxyéthanal, les composés diépoxy, et leurs combinaisons. Plus préférentiellement, l'aldéhyde est le glyoxal.

L'étape c) est réalisée de préférence à une température comprise entre 19 et 26°C dans un réacteur de préférence sous agitation par addition d'acide, par exemple acide sulfurique.

Selon un autre mode de réalisation préféré, le polymère **A** obtenu à l'étape a) peut être ramifié, pour ce faire un agent ramifiant radicalaire peut être ajouté lors de l'étape a), il peut notamment être choisi dans le groupe comprenant le méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine. De préférence, la teneur en agent ramifiant ajouté lors de l'étape a) est comprise entre 5 et 5000 ppm par rapport à la masse de polymère.

La présente invention concerne également un polymère hydrosoluble anionique obtenu par le procédé de l'invention.

La présente invention concerne également un procédé papetier mettant en œuvre un polymère anionique hydrosoluble selon l'invention. Ainsi, l'invention concerne l'utilisation d'un polymère anionique hydrosoluble dans un procédé papetier.

Dans le cadre de l'invention, un procédé papetier correspond à un procédé de fabrication de papier, carton ou analogue, notamment un procédé de fabrication d'une feuille de papier, carton ou analogues.

Le polymère anionique hydrosoluble de l'invention peut être additionné en combinaison avec un polymère cationique pour augmenter sa rétention. Le polymère anionique hydrosoluble de l'invention permet d'augmenter les performances des résines cationiques utilisées pour la résistance humide lorsqu'il est associé à celles-ci. Les polymères cationiques concernés sont de type PAE (polyaminopolyamide-épichlorhydrine), Polyvinylamine, Polyacrylamide glyoxalés, PEI (polyethylèneimine), PA (polyamine-epi), polymères issus de la dégradation d'Hofmann, Polyacrylamides et les amidons. De préférence le ratio massique entre le polymère anionique de l'invention et les résines cationiques est compris entre 2/1 et 1/10.

Selon l'invention, le polymère anionique hydrosoluble est ajouté dans le procédé papetier, avant ou après formation de la feuille de papier, carton ou analogue. Ainsi, la mise en contact de la matière cellulosique avec le polymère de l'invention peut être effectuée de différentes manières et notamment selon les méthodes typiques connues de l'homme du métier. Le polymère anionique hydrosoluble pourra être ajouté à la matière cellulosique sous forme de solution aqueuse diluée ou non diluée. Il pourra être appliqué par une technique d'imprégnation, ou pourra être directement ajouté dans la suspension fibreuse à tout endroit du procédé de fabrication du papier où habituellement des agents de résistance à sec sont introduits.

Ainsi, le polymère selon l'invention pourra être introduit dans la pâte épaisse (ou thick stock en anglais) ou dans la pâte diluée (ou thin stock en anglais). Il pourra être ajouté au niveau de la pompe de mélange ou du tamis filtrant. Préférentiellement le polymère sera introduit avant la caisse de tête.

Préférentiellement, le polymère selon l'invention est injecté industriellement dans la suspension fibreuse, i.e. avant sa dilution par les eaux blanches (pâte épaisse). La consistance de la pâte est de l'ordre de 2 à 5 % en masse de fibres cellulosiques.

Le procédé papetier selon l'invention peut être mis en œuvre avec tout type de pâte à papier comme par exemple des pâtes de fibres vierges (Kraft, Bisulfite), de fibres recyclées, des pâtes désencrées, des pâtes mécaniques et thermomécaniques.

Le polymère final pourra avantageusement être préparé à proximité de la machine à papier.

Préférentiellement, le procédé papetier de l'invention, l'additif est un polymère anionique hydrosoluble selon l'invention issu de la réaction entre un polymère **A** selon l'invention comprenant au moins 5 mol% d'acide 2-acrylamido-2-méthylpropane sulfonique et/ou ses sels et entre 70 et 95 mol% d'acrylamide et de 1 à 30 % en poids de glyoxal. Encore plus préférentiellement, le polymère anionique hydrosoluble est issu de la réaction entre un polymère **A** selon l'invention constitué de 5 à 30 mol% d'acide 2-acrylamido-2-méthylpropane sulfonique et/ou ses sels et 70 à 95 mol % d'acrylamide, et de 1 à 30 % en poids de glyoxal.

Les polymères anioniques hydrosolubles issus du procédé de l'invention présentent une stabilité améliorée et de plus le procédé papetier mettant en œuvre ces polymères permet d'améliorer les performances de résistance à sec et humide du papier. L'invention et les avantages qui en découlent ressort bien des exemples de réalisation suivants.

### Exemples de réalisation

### Protocole de synthèse du composé de l'invention

### Synthèse du (co)polymère base (copolymère A)

Les exemples 1 et 3 ont été effectués avec un copolymère **A** d'acrylamide et de 2-acrylamido-2-méthylpropane sulfonate de sodium (85/15, %mol). Pour ce faire, ces 2 monomères ont été introduits dans un réacteur pour être polymérisés en présence de persulfate de sodium et de métabisulfite de sodium, catalyseurs bien connus de l'homme de métier.

Pour l'exemple 2, le polymère **A** diffère des polymères **A** des exemples 1 et 3, par sa structure ramifiée obtenue par ajout de 500 ppm de méthylène bis acrylamide (MBA) lors de la polymérisation.

Dans tous les exemples, en fin de polymérisation, le copolymère **A** est à une concentration massique de 20 % dans l'eau.

Pour les contre-exemples (1, 1bis et 2) le polymère base est un copolymère d'acrylamide et d'acrylate de sodium (85/15, %mol).

### Glvoxalation

### Produit final à 7% massique dans l'eau

Dans un réacteur agité de 1000 mL, 200 g de copolymère **A** (20% massique dans l'eau) et 430 g d'eau déminéralisée sont introduits. Le réacteur est équipé d'une sonde de mesure de pH. Après 10 minutes d'agitation le pH est ajusté à 11,3 avec une solution de soude à 30% (massique dans l'eau). La température est maintenue entre 19 et 26°C.

16 g de glyoxal à 40% (massique dans l'eau) sont additionnés. Un contrôle du pH et un suivi de la viscosité permettent d'obtenir un produit de 70 cps (viscosité de fin de réaction). Lorsque cette viscosité est atteinte, on stoppe la réaction par un abaissement du pH à moins de 3,5 par addition d'acide sulfurique (H₂SO₄ 92% massique dans l'eau). La viscosité finale et le pH sont enregistrés.

Le viscosimètre est de type Brookfield, avec un module LV1 et une vitesse de 60 tr/min. Le pH peut être ajusté après addition de glyoxal avec une solution de soude 10% (massique dans l'eau). Il est possible de conduire la réaction à pH contrôlé par addition continue de soude 10%, mais aussi d'additionner le glyoxal en plusieurs fractions.

Le polymère final est stocké dans une enceinte climatique à 32°C de façon à évaluer sa stabilité. Un suivi journalier de la viscosité est effectué jusqu'à la gélification du produit. Le produit est alors inutilisable. Le viscosimètre utilisé est de type Brookfield, avec un module LV1 et une vitesse de 60 rpm.

| | **Viscosité du copolymère A (cPs)** | **viscosité initiale (après ajout du glyoxal) (cPs)** | **viscosité en fin de reaction (cPs)** | **viscosité finale (après l'ajout de l'acide) (cPs)** | **Cinétique (min)** | **stabilité 32°C (jours)** | **pH** |
|---|---|---|---|---|---|---|---|
| Contre exemple 1 | 1040 | 29 | 70 | 34 | 27 | 12 | 3,1 |
| Contre exemple 1 bis | 1040 | 33 | 151 | 70 | 15 | 3 | 3,1 |
| Exemple 1 | 910 | 25 | 70 | 69 | 35 | 30 | 3,2 |
| Exemple 2 | 1100 | 30 | 65 | 64 | 29 | 25 | 3.1 |

Pour la réalisation du contre-exemple 1 bis, la réaction a été arrêtée à une viscosité plus haute de façon à obtenir une viscosité finale équivalente à l'exemple 1, après la chute constatée de la viscosité.

### Produit final à 10% massique dans l'eau

Dans un réacteur agité de 1000 mL, 355 g de copolymère A (20% massique dans l'eau) et 430 g d'eau déminéralisée sont introduits. Le réacteur est équipé d'une sonde de mesure de pH. Après 10 minutes d'agitation le pH est ajusté à 11.3 avec une solution de soude à 30%. (massique dans l'eau). La température est maintenue entre 24 et 26°C.

28.5 g de glyoxal à 40% (massique dans l'eau) sont additionnés. Un contrôle du pH et un suivi de la viscosité permettent d'obtenir un produit de 112 cps (viscosité de fin de réaction). Lorsque cette viscosité est atteinte, on stoppe la réaction par un abaissement du pH à moins de 3,5 par addition d'acide sulfurique (H₂SO₄ 92% massique dans l'eau). La viscosité finale et le pH sont enregistrés.

Le viscosimètre est de type Brookfield, avec un module LV1 et une vitesse de 60 rpm. Le pH peut être ajusté après addition de glyoxal avec une solution de soude 10% (massique dans l'eau). Il est possible de conduire la réaction à pH contrôlé par addition continue de soude 10%, mais aussi d'additionner le glyoxal en plusieurs fractions.

| | **Viscosité du copolymère A (cPs)** | **viscosité initiale après ajout du glyoxal (cPs)** | **viscosité en fin de reaction (cPs)** | **viscosité finale après ajout de l'acide (cPs)** | **Cinétique (min)** | **stabilité 32°C (jours)** | **pH** |
|---|---|---|---|---|---|---|---|
| Contre exemple 2 | 1040 | 50 | 111 | 62 | 35 | 7 | 3,4 |
| Exemple 3 | 910 | 42 | 112 | 110 | 21 | 15 | 3,1 |

Pour tous les exemples (produit finaux obtenus par le procédé de l'invention), on n'observe pas de chute de viscosité lors de l'acidification contrairement aux contres exemples. La stabilité des polymères des contre-exemples est aussi inférieure aux polymères de l'invention.

### Préparation de la pâte

La pâte utilisée est constituée de fibres vierges. La pâte à papier est préparée en désintégrant pendant 20 minutes 60 grammes de fibres recyclées dans 2 litres d'eau. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 60g/m². Les tests sont réalisés avec la pâte à un pH de 6.6.

### Test des propriétés des polymères

### Performances en application DSR (résistance à sec), grammage à 60g/m2

### 1/ Formation de la feuille

Les formettes de papier sont réalisées avec une formette dynamique automatique. La pâte est introduite dans le cuvier de la formette dynamique, diluée jusqu'à une consistance de 0,32% (massique) et agitée modérément avec un agitateur mécanique afin d'homogénéiser la suspension fibreuse. En mode manuel, la pâte est pompée jusqu'au niveau de la buse afin d'amorcer le circuit. Un buvard et la toile de formation sont placés dans le bol de la formette dynamique avant de démarrer la rotation du bol à 1000m/min et de construire le mur d'eau. Un polymère de type PAE (polyaminopolyamide-épichlorhydrine) est introduit à un dosage de 3kg/t sec. Après 45 secondes, le polymère des exemples 1 à 3 ou contre-exemple est alors introduit dans la suspension fibreuse agitée avec un temps de contact de 45 secondes avant introduction d'un agent de rétention (FO 4190 PG1^{®}) à un dosage de 150 g/t. La feuille est alors réalisée (en mode automatique) par 22 allers-retours de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107°C. Les deux buvards sont ensuite retirés et la feuille est stockée pendant une nuit dans une pièce à humidité et température contrôlées (50% d'humidité relative et 23 °C). Les propriétés de résistance à sec de toutes les feuilles obtenues par cette procédure sont alors évaluées.

### 2/ Test d'éclatement

L'éclatement (Burst index) est mesuré avec un éclatomètre Messmer Buchel M 405 (moyenne sur 14 mesures). Le test est effectué selon la norme TAPPI T403 om-91

### 3/ Test de traction à sec

La longueur de rupture est mesurée à l'aide d'un dynamomètre testometric AXM250. Le test est effectué selon la norme TAPPI 494 om-88.

### 4/ Test de traction humide

La longueur de rupture est mesurée à l'aide d'un dynamomètre testometric AXM250. Le test est effectué selon la norme TAPPI T 456 om-87

### Test applicatif 1

Dans l'exemple suivant les feuilles de papier sont réalisées selon la procédure ci-dessus en introduisant le polymère à un dosage de 1.0 et 2.0 kg/T (polymère sec / fibre sèche).

| | Réf. | Exemple 1 (1kg) | Exemple 1 (2kg) | contre-exemple 1 (1kg) | contre-exemple 1 (2kg) | contre-exemple 1 bis (1kg) | contre-exemple 1 bis (2kg) |
|---|---|---|---|---|---|---|---|
| Grammage | 62,7 | 61,7 | 61,7 | 61,9 | 58,6 | 62,6 | 61,1 |
| | | | | | | | |
| index éclatement | 3,13 | 3,68 | 4,21 | 3,64 | 3,98 | 3,70 | 3,90 |
| amélioration % | | 18% | 34% | 16% | 27% | 18% | 25% |
| | | | | | | | |
| Traction sèche (km) | 5,00 | 5,90 | 6,24 | 5,80 | 6,09 | 5,70 | 6,45 |
| amélioration | | 18% | 25% | 16% | 22% | 14% | 29% |
| | | | | | | | |
| Traction humide (km) | 1,80 | 2,42 | 2,62 | 2,39 | 2,57 | 2,34 | 2,57 |
| amélioration | | 34% | 46% | 33% | 43% | 30% | 43% |

Le tableau ci-dessus présente une amélioration des performances de propriétés physiques lorsqu'on utilise le polymère de l'invention. Les polymères contenant de l'acide acrylique (contre-exemples 1, 1 bis et 2) apportent des performances inférieures.

### Test applicatif 2

Dans l'exemple suivant, les polymères des exemples 1 et 2 sont comparés à des polymères anioniques bien connus de l'homme de l'art : carboxyméthylcellulose (CMC) et polyacrylamide anionique (PAM anionique). Les feuilles de papier sont réalisées selon la procédure déjà citée. Le polymère type PAE est introduit à un dosage de 2 kg/t pour chaque test.

| | Réf. | CMC 1 kg/t | PAM anionique 1kg/t | Exemple 1 1 kg/t | Exemple 2 1 kg/t |
|---|---|---|---|---|---|
| Grammage | 63,03 | 62,29 | 61,58 | 60,53 | 62,26 |
| Burst index | 2,568 | 3,104 | 2,842 | 3,317 | 3,368 |
| amélioration % | | 20,88% | 10,68% | 29,17% | 31,16% |
| | | | | | |
| Traction sèche (km) | 4,423 | 5,043 | 4,809 | 5,309 | 5,396 |
| Amélioration % | | 14,02% | 8,73% | 20,03% | 22,00% |
| | | | | | |
| Résistance Humide (km) | 1,728 | 2,058 | 1,829 | 2,320 | 2,247 |

Dans ce tableau, on observe une nette amélioration lorsque le polymère obtenu par le procédé de l'invention est utilisé en comparaison avec les polymères connus par l'homme de métier.

### Test applicatif 3

Dans l'exemple suivant, le polymère cationique utilisé pour toutes les feuilles est un polymère cationique glyoxalé à un dosage de 2 kg/t (ce polymère remplace la PAE du test applicatif 2).

| | Réf. | CMC 1 kg/t | PAM Anionique 1 kg/t | Exemple 1 1 kg/t | Exemple 2 1 kg/t | contre-exemple 1 1 kg/t |
|---|---|---|---|---|---|---|
| Grammage | 64,16 | 64,4 | 64,8 | 63,72 | 63,11 | 63,99 |
| Indice d'éclatement | 2,498 | 2,980 | 3,040 | 3,345 | 3,413 | 3,222 |
| amélioration % | | 19,31% | 21,72% | 33,94% | 36,66% | 28,99% |
| Traction sèche (km) | 4,459 | 5,006 | 4,985 | 5,271 | 5,513 | 4,585 |
| Amélioration % | | 12,27% | 11,80% | 18,21% | 23,64% | 2,83% |
| | | | | | | |
| Traction humide (km) | 0,703 | 1,020 | 1,244 | 1,376 | 1,494 | 1,227 |

Dans ce tableau, on observe une nette amélioration lorsque le polymère obtenu par le procédé de l'invention est utilisé, bien que le polymère cationique soit d'une nature différente (polymère cationique glyoxalé / PAE).

## Revendications

1. Procédé de fabrication de polymères anioniques hydrosolubles en solution aqueuse comprenant au moins les étapes successives suivantes
a) polymérisation en solution aqueuse de monomères anioniques dont au moins 5 mol% d'acide 2-acrylamido-2-méthylpropane sulfonique et/ou un de ses sels et d'au moins un monomère non ionique jusqu'à une concentration massique en polymère **A** comprise entre 5 et 40%, le polymère A obtenu contenant entre 5 et 30 mol% de monomères anioniques et entre 70 et 95 mol% d'au moins un monomère non ionique,
b) ajout d'au moins un aldéhyde dans la solution obtenue à l'étape a),
c) acidification à un pH compris entre 3 et 4 de la solution obtenue à l'étape b).

2. Procédé selon la revendication 1 **caractérisé en ce que** les monomères non ioniques sont choisis parmi l'acrylamide, le méthacrylamide, le N,N diméthylacrylamide et l'acrylonitrile.

3. Procédé selon la revendication 1 ou 2 **caractérisé en ce que** le polymère A est un copolymère d'acrylamide et d'acide 2-acrylamido-2-méthylpropane sulfonique et/ou ses sels.

4. Procédé selon l'une quelconque des revendications 1 à 3 **caractérisé en ce que** pour l'étape b) 1 à 30% massique d'aldéhyde est ajouté, l'aldéhyde étant choisi dans le groupe comprenant le glyoxal, le glutaraldéhyde, le furane-dialdéhyde, le 2-hydroxyadipaldéhyde, le succinaldéhyde, le dialdéhyde amidon, le 2,2 diméthoxyéthanal, les composés diépoxy, et leurs combinaisons.

5. Procédé selon l'une quelconque des revendications 1 à 4 **caractérisé en ce que** pour l'étape b) l'aldéhyde est le glyoxal

6. Procédé selon l'une quelconque des revendications 1 à 5, **caractérisé en ce que** le polymère A est ramifié lors de l'étape a) en présence d'un agent ramifiant radicalaire choisi dans le groupe comprenant le méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine.

7. Polymère anionique hydrosoluble susceptible d'être obtenu par le procédé selon l'une quelconque des revendications 1 à 6.

8. Procédé de fabrication d'une feuille de papier, carton ou analogues, selon lequel, avant ou après formation de ladite feuille, on met en contact la matière cellulosique avec au moins un additif, **caractérisé en ce que** ledit additif est un polymère anionique hydrosoluble obtenu selon le procédé de l'une quelconque des revendications 1 à 6.

9. Procédé selon la revendication 8 **caractérisé en ce que** l'additif est un polymère anionique hydrosoluble issu de la réaction entre un copolymère A comprenant au moins 5 mol% d'acide 2-acrylamido-2-méthylpropane sulfonique et/ou ses sels et entre 70 et 95 mol% d'acrylamide et de 1 à 30 % en poids de glyoxal.

10. Procédé selon la revendication 8 ou 9 **caractérisé en ce que** l'additif est un polymère anionique hydrosoluble issu de la réaction entre un copolymère A constitué de 5 à 30 mol% d'acide 2-acrylamido-2-méthylpropane sulfonique et/ou ses sels et 70 à 95 mol % d'acrylamide, et de 1 à 30 % en poids de glyoxal.

## Patentansprüche

1. Verfahren zur Herstellung von wasserlöslichen anionischen Polymeren in wässriger Lösung, umfassend mindestens die folgenden aufeinanderfolgenden Schritte
a) Polymerisation in wässriger Lösung von anionischen Monomeren, darunter mindestens 5 Mol-% 2-Acrylamido-2-methylpropansulfonsäure und/oder eines ihrer Salze, und mindestens einem nichtionischen Monomer bis zu einer Massenkonzentration von Polymer **A** zwischen 5 und 40 %, wobei das erlangte Polymer A zwischen 5 und 30 Mol-% anionische Monomere und zwischen 70 und 95 Mol-% mindestens eines nichtionischen Monomers enthält,
b) Zugabe von mindestens einem Aldehyd zu der in Schritt a) erlangten Lösung,
c) Ansäuerung der in Schritt b) erlangten Lösung auf einen pH zwischen 3 und 4.

2. Verfahren nach Anspruch 1, **dadurch gekennzeichnet, dass** die nichtionischen Monomere ausgewählt sind aus Acrylamid, Methacrylamid, N,N-Dimethylacrylamid und Acrylnitril.

3. Verfahren nach Anspruch 1 oder 2, **dadurch gekennzeichnet, dass** das Polymer A ein Copolymer aus Acrylamid und 2-Acrylamido-2-methylpropansulfonsäure und/oder deren Salzen ist.

4. Verfahren nach einem der Ansprüche 1 bis 3, **dadurch gekennzeichnet, dass** für Schritt b) 1 bis 30 Gew.-% Aldehyd hinzugefügt wird, wobei der Aldehyd ausgewählt ist aus der Gruppe, bestehend aus Glyoxal, Glutaraldehyd, Furandialdehyd, 2-Hydroxyadipaldehyd, Succinaldehyd, Stärkedialdehyd, 2,2-Dimethoxyethanal, Diepoxyverbindungen und Kombinationen davon.

5. Verfahren nach einem der Ansprüche 1 bis 4, **dadurch gekennzeichnet, dass** für Schritt b) der Aldehyd Glyoxal ist

6. Verfahren nach einem der Ansprüche 1 bis 5, **dadurch gekennzeichnet, dass** das Polymer A wird in Schritt a) in Anwesenheit eines radikalischen Vernetzungsmittels vernetzt, das ausgewählt ist aus der Gruppe, bestehend aus Methylenbisacrylamid (MBA), Ethylenglykoldiacrylat, Polyethylenglykoldimethacrylat, Diacrylamid, Cyanomethylacrylat, Vinyloxyethylacrylat oder Methacrylat, Triallylamin.

7. Wasserlösliches anionisches Polymer, das durch das Verfahren nach einem der Ansprüche 1 bis 6 erlhältlich ist.

8. Verfahren zur Herstellung eines Bogens aus Papier, Pappe oder dergleichen, bei dem vor oder nach Bogenbildung das Zellulosematerial mit mindestens einem Zusatzstoff in Kontakt gebracht wird, **dadurch gekennzeichnet, dass** der Zusatzstoff ein wasserlösliches anionisches Polymer ist, das gemäß dem Verfahren nach einem der Ansprüche 1 bis 6 erlangt wird.

9. Verfahren nach Anspruch 8, **dadurch gekennzeichnet, dass** der Zusatzstoff ein wasserlösliches anionisches Polymer ist, das aus der Reaktion zwischen einem Copolymer A, umfassend mindestens 5 Mol-% 2-Acrylamido-2-methylpropansulfonsäure und/oder deren Salze und zwischen 70 und 95 Mol-% Acrylamid, und 1 bis 30 Gew.-% Glyoxal stammt.

10. Verfahren nach Anspruch 8 oder 9, **dadurch gekennzeichnet, dass** der Zusatzstoff ein wasserlösliches anionisches Polymer ist, das aus der Reaktion zwischen einem Copolymer A, das aus 5 bis 30 Mol-% 2-Acrylamido-2-methylpropansulfonsäure und/oder deren Salzen und 70 bis 95 Mol-% Acrylamid besteht, und 1 bis 30 Gew.-% Glyoxal stammt.

## Claims

1. Method for producing water-soluble anionic polymers in aqueous solution comprising at least the following successive steps:
a) polymerisation in aqueous solution of anionic monomers comprising at least 5 mol % of 2-acrylamido-2-methylpropane sulfonic acid and/or one of the salts thereof, and of at least one nonionic monomer up to a concentration of polymer **A** of between 5 and 40 weight %, the polymer A obtained after step a) containing between 5 and 30 mol % of anionic monomers and between 70 and 95 mol % of at least one nonionic monomer;
b) adding at least one aldehyde to the solution obtained at step a);
c) acidifying the solution obtained at step b) to a pH of between 3 and 4.

2. The method according to claim 1, **characterized in that** the nonionic monomers are selected from among acrylamide, methacrylamide, N,N dimethylacrylamide and acrylonitrile.

3. The method according to claim 1 or 2, **characterized in that** polymer A is a copolymer of acrylamide and 2-acrylamido-2-methylpropane sulfonic acid and/or the salts thereof.

4. The method according to any of claims 1 to 3, **characterized in that** for step b) 1 to 30 weight % of aldehyde is added, the aldehyde being selected from the group comprising glyoxal, glutaraldehyde, furan-dialdehyde, 2-hydroxyadipaldehyde, succinaldehyde, dialdehyde starch, 2,2 dimethoxyethanal, diepoxy compounds, and combinations thereof.

5. The method according to any of claims 1 to 4, **characterized in that** for step b) the aldehyde is glyoxal

6. The method according to any of claims 1 to 5, **characterized in that** polymer A is branched during step a) in the presence of a radical branching agent selected from the group comprising methylenebisacrylamide (MBA), ethylene glycol diacrylate, polyethylene glycol dimethacrylate, diacrylamide, cyanomethyl acrylate, vinyloxyethyl acrylate or methacrylate, triallylamine.

7. Water-soluble anionic polymer able to be obtained with the method according to any of claims 1 to 6.

8. Method for producing a sheet of paper, cardboard or the like whereby, before or after formation of said sheet, the cellulosic material is contacted with at least one additive, **characterized in that** said additive is a water-soluble anionic polymer obtained with the method according to any of claims 1 to 6.

9. The method according to claim 8, **characterized in that** the additive is a water-soluble anionic polymer resulting from the reaction between a copolymer A comprising at least 5 mol % of 2-acrylamido-2-methylpropane sulfonic acid and/or the salts thereof, and between 70 and 95 mol % of acrylamide, and from 1 to 30 weight % of glyoxal.

10. The method according to claim 8 or 9, **characterized in that** the additive is a water-soluble anionic polymer resulting from the reaction between a copolymer A composed of 5 to 30 mol % of 2-acrylamido-2-methylpropane sulfonic acid and/or the salts thereof, and 70 to 95 mol % of acrylamide, and from 1 to 30 weight % of glyoxal.
